# EUROPEAN PATENT SPECIFICATION

(11) **EP 2 602 419 B1**
(45) Date of publication and mention of the grant of the patent: **18.03.2015**
(21) Application number: 12195448.1
(22) Date of filing: 04.12.2012
(51) Int. Cl.: E06B 5/02, E04G 21/28, E06B 9/02, E06B 9/52, E04G 21/24, B65G 53/46, D21C 7/06, E06B 9/00

(54) **Window guard device**
Fensterschutzvorrichtung
Dispositif de protection de fenêtre

(30) Priority: 05.12.2011 SE 1151158
(43) Date of publication of application: 12.06.2013
(73) Proprietor: Hantverkare Larsson i Örebro., 719 92 Vintrosa (SE)
(72) Inventor: LARSSON, Christian, 719 92 VINTROSA (SE)
(74) Representative: Johansson, Lars E.

(56) References cited:
- WO-A1-91/16519
- WO-A1-2008/131272
- DE-A1- 2 751 219

## Description

### TECHNICHAL FIELD

The present invention relates to a weather guard device intended to be fitted externally of a window.

### BACKGROUND ART

Window guards are well known in the art and are normally used to protect window openings from weather, wind and cold during maintenance operations, such as painting, where the window glass might need to be removed from the window frame leaving the opening unprotected. A window guard may be thus be used to shield the opening until the glass is back in place.

A known weather guard for window is seen in WO 91/16519 which discloses a frame supporting a cloth or fabric wherein the frame and cloth are brought into abutment with parts of the building façade located adjacent the window and form a free, limited space between the window frame, window lining or reveal and said cloth. However, known weather guards are often very heavy due to the need for a sturdy and robust frame structure as well as they are expensive to produce, thereby also being expensive to buy. Often, due to the high prices, a maintenance firm will have access only a limited number of weather guards meaning that only one or a few window/s can be treated at the same time and where the weather guards available need to be moved around as the work proceeds. Known weather guards can also be hard to fit to the window opening by a single person, e.g. due their heavy weight, and sometimes also hard to extend to the proper outline and correctly put into place onto the façade.

### SUMMARY

It is an object of the present invention to solve or at least minimise the above mentioned problems, and to provide and improved weather guard, which is accomplished by means of a weather guard device intended to be fitted externally of a window and comprising a frame and a cloth of fabric which coats said frame, said frame being intended to abut with facade surfaces located adjacent the window such as to form a free space between the window frame and the cloth, and wherein the frame comprises a number of frame members which extend from a common securing device at an apex of said frame, wherein each frame member comprises at least two tubular segments adapted to be joined end-to-end at a joint into a unitary frame member and an elastic cord means extending through the hollow lumen of each of said segments.

Several advantages are achieved thanks to the solution according to the invention, whereof a few include (in a non-exhaustive way):
- that a lightweight construction is achieved which at the same time is very durable and capable of withstanding external impacts (e.g. wind and rain ) as well as it is easily handled by a single person both when opening-up and collapsing the device,
- that a less expensive product may be achieved thanks to the use of lighter, less material-consuming frame members and
- that the frame members may be disassembled into their separate sub-segments and the entire structure of the weather guard device including the cloth of fabric may be folded into a compact package having a length approximately equal to the length of a respective frame segment. Thus folded, the weather guard structure occupies a relatively compact space as well as it is very light weighted, and may readily be transported from place to place or conveniently stored.

In this application the term "opened-up" is used to describe the open, spread-out structure of an assembled weather guard, and "collapsed" refers to a weather guard where the frame members has been forced together resulting in the weather guard assuming a more or less folded position.

Other advantages provided by the weather guard for window according to the invention will become apparent when studying the following description.

### BRIEF DESCRIPTION OF THE DRAWINGS

In the following, the invention will be described in more detail with reference to preferred embodiments and the appended drawings.
Fig. 1 is a perspective view from inside a window frame having fitted thereto an inventive weather guard, schematically shown, according to one embodiment of the invention,
Fig. 2a is a front-view of a schematically illustrated weather guard according to one embodiment of the invention,
Fig. 2b is a perspective front-view of a schematically illustrated weather guard according to one embodiment of the invention,
Fig. 3a is a rear-view of a schematically illustrated weather guard according to one embodiment of the invention,
Fig. 3b is a perspective rear-view of a schematically illustrated extended weather guard cloth according to one embodiment of the invention,
Fig. 4 is a side-view of a schematically illustrated weather guard according to one embodiment of the invention, placed adjacent a façade around a window,
Fig 5a is a schematically illustrated view of a frame according to one embodiment of the invention,
Fig. 5b is a detailed view of two frame members each comprising a number of frame segments,
Fig. 5c is a schematically illustrated view of a frame seen in Fig. 5a in a disassociated configuration,
Fig. 6a-b illustrate a securing device according to one embodiment of the invention,
Fig. 7 is a frontal perspective view of a schematically illustrated weather guard accompaniment in the form of an external protection cover according to one embodiment of the invention, and
Fig. 8 is a cross-sectional side view showing a weather guard according to the invention covered by an external protection cover shown in Fig. 7.

### DETAILED DESCRIPTION OF THE DRAWINGS

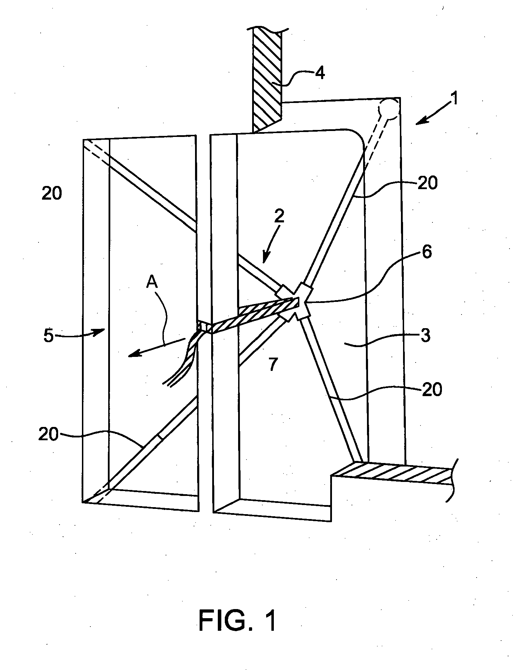

In the following description, and with reference to Figs. 1 - 8, a weather guard device according to one embodiment is generally referred to as 1.

The general principle for fitting a weather guard externally around a window opening 5 applies to all embodiments of the invention and is schematically illustrated in Fig. 1, wherein there is seen a weather guard 1 located externally of and adjacent to the window opening, abutting the façade 4 located around the window opening 5 thereby forming a free space between the window frame, window reveals and the cloth 3 of the weather guard 1. Thereby the window opening 5 is safely shielded from wind, rain and cold for instance during maintenance work such as painting or when the window glass has been removed for some reason.

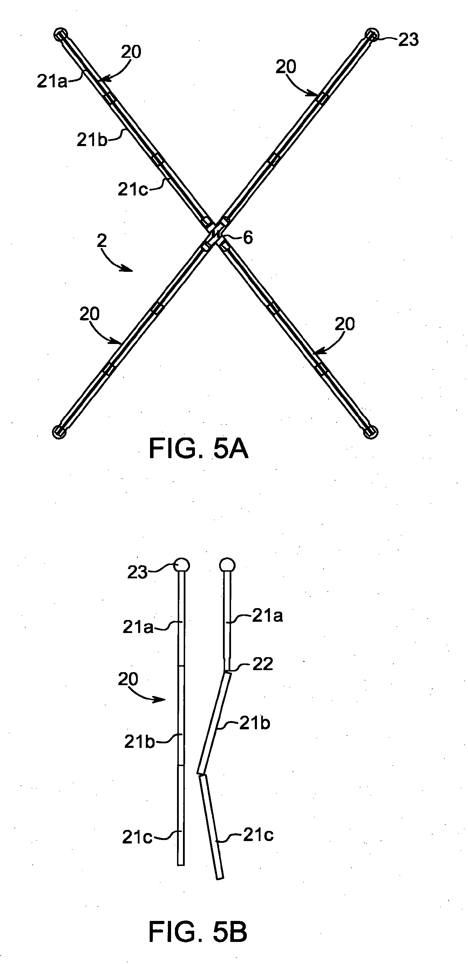

Referring now mainly to Figs. 1 - 5, said window guard device 1 comprises a frame 2 and a cloth of fabric 3 draped over said frame 2, said frame being intended to abut with facade surfaces 4 located adjacent the window opening 5. The frame 2 provides a structural support to the device 1 and comprises a number of (preferably four) frame members 20 which are releasably attached to, and extend from a common securing device 6 at an apex of said frame 2. Each frame member 20 further comprises at least two, preferably at least three tubular frame segments 21a-c adapted to be joined end-to-end at a joint into a unitary frame member 20, and an elastic cord means 22 (see Fig. 5a-b) extending through the hollow lumen of each of said segments 21. This means that each of the frame members 20 is configurated as hollow tubular elements, preferably cylindrical tubular elements, having an elastic cord 22 passing through the center thereof.

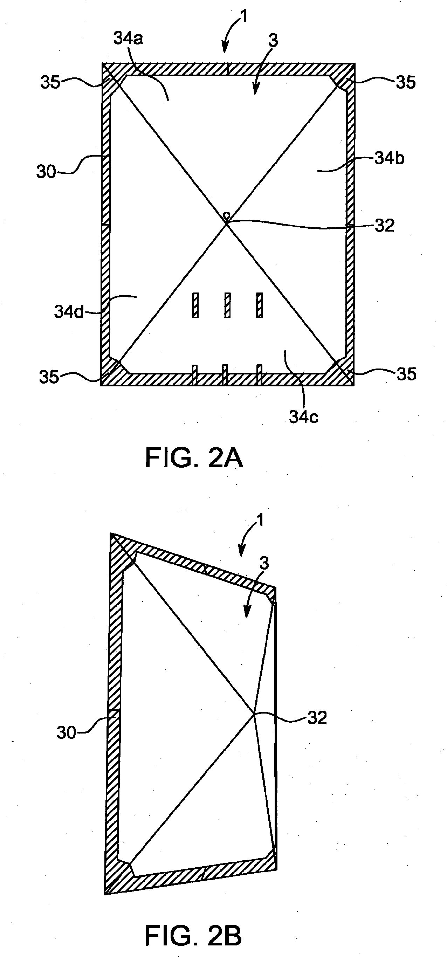

The cloth 3 comprises a central main section 34 which is preferably made of a light weight, strong and waterproof fabric, for example nylon- or polyester-based fabrics. In Fig. 2a there is shown a weather guard device 1 from a front side having a pyramidal shape, where the central main section of the cloth 3 comprises four side portions 34a-d. The cloth 3 is further preferably furnished with a base support 30 which is integrated with the central main section 34, e.g. by means of sewing of gluing. Said base support 30 is preferably made of an abrasion resistant, robust material, such as Gore-Tex® or a fabric with similar properties which preferably also is water resistant. As will be later described in more detail, the base support 30 is arranged to receive and secure the end supports 23 of the frame members 20. Preferably, each corner portion 35 exhibits a receiving pocket arranged to safely secure said outer end supports 23.

Each of the frame members 20 is arranged to be disassembled into at least two, preferably at least three sections/segments 21a-c, as will be seen more fully hereinafter with respect to a detailed description of frame member 20 as seen in Fig. 5a-c. In particular, a frame member 20 comprises segments 21a-c which are fabricated from a suitable light weight material having a limited degree of flexibility while retaining desired strength characteristics sufficient to support the cloth of fabric 3 and otherwise accommodate the features of this invention. For example, in a first preferred embodiment of the weather guard structure 1 the segments 21a-c are made of lengths of metal tubings (such as steel or aluminum) having an outer diameter of about 15 - 25 mm and an internal through bore of sufficient diameter to accommodate 2 - 5 mm elastic cords 22. Other materials than metal may be used for the frame members as long as they fulfill the strength requirements. For instance it is possible to use glass fiber tubings, whereupon it might be possible to provide an even lighter frame structure 2 where said frame members having another dimension than the metal tubings due to difference in material strength. In a preferred aspect of the invention the frame members 20 of the frame 2 are rigid poles which upon assembly of the weather guard 1 provides straight side-poles leading to a pyramidal shape of the weather guard, which will be described later.

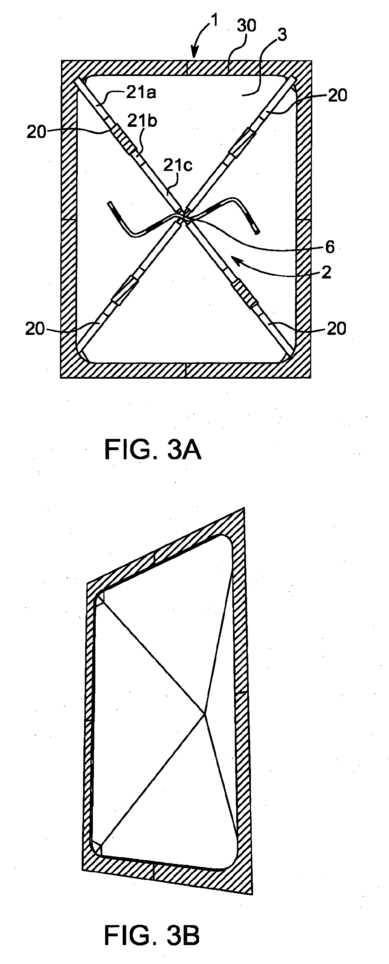

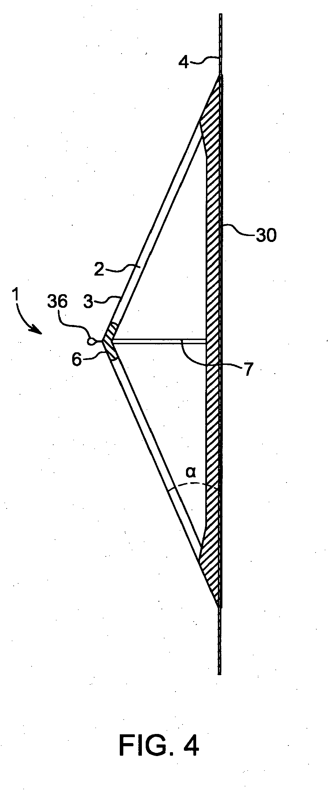

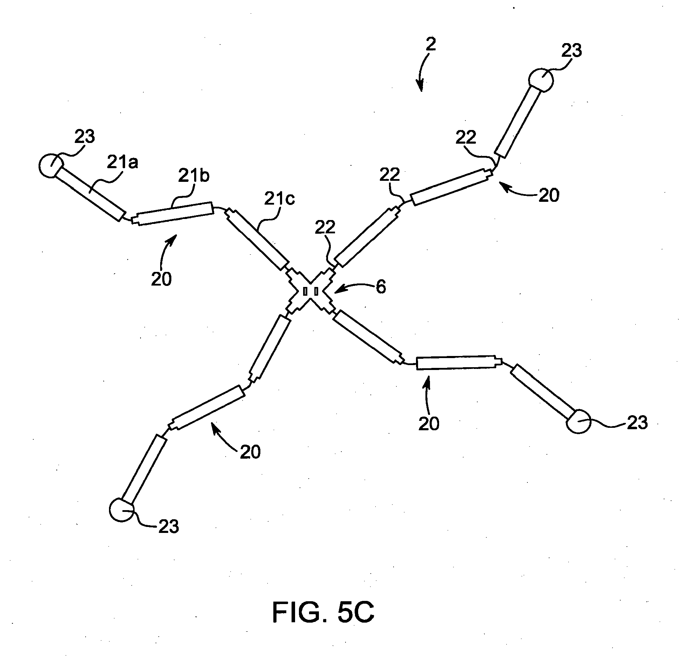

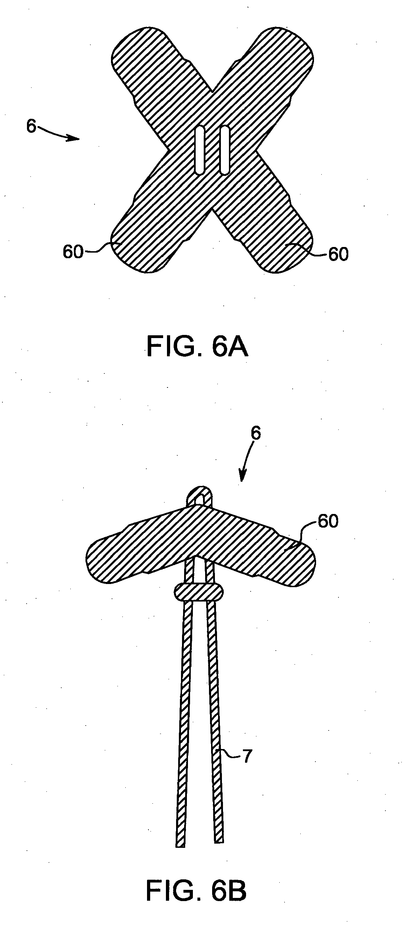

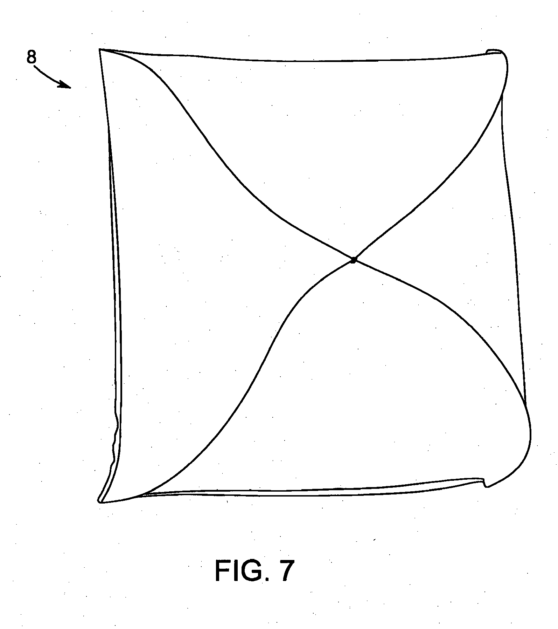

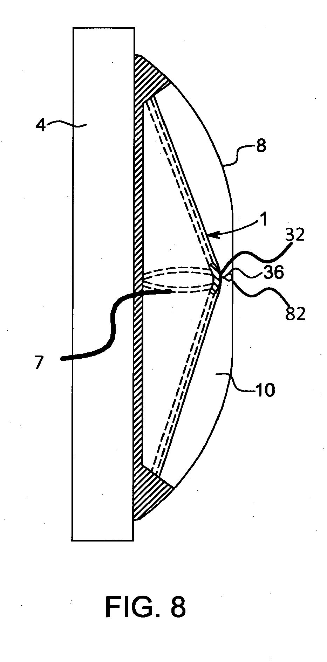

As seen in Fig. 3a, the frame members 20 are centrally joined by a common securing device 6 (also called "holding device") which is described in more detail in Fig. 6. The securing device 6 exhibits one protruding support/guide arm 60 for each of the frame members 20 arranged to receive and support said respective frame member 20. Each outer end of said frame members 20 is provided with an outer end support 23 (shown in Fig. 5) which is arranged to be secured at the respective corner portions 35 of the cloth fabric cover 3. E.g. in case the weather guard 1 comprises four frame members 20 (as is the case e.g. in Fig. 1 - 4) said cloth of fabric 3 will have a square pyramidal shape with a rectangular base 30 and an apex 32, seen in Figs. 2a-b, where each of the four sides 34a-d of the pyramidal cloth 3 forms a triangle between the base 30 and the apex 32. A preferred design of the weather guard device 1 is also illustrated in Fig. 4, herein shown from a side view, in cross section, with the base 30 positioned adjacent to the façade 4 of a building, said frame 2 cooperating with the cloth 3 to form said opened-up pyramidal shaped structure. In one embodiment the frame 2 creates an angle α against the substantially flat façade 4 of a building between 15 - 30°, preferably between 18 - 25°. The weather guard may be provided with a holding loop 36 which function will be more described in connection to Figs. 7 and 8.

Fig. 5a-b show a frame 2 and its components including frame members 20, holding device 6 for supporting the frame members 20, frame segments 21a-c, outer end supports 23 and the elastic cords 22. In one embodiment of the invention the elastic cord 22 of each frame member 20 is attached in one first end to said outer end support 23 and in one second end to said securing device 6. Hereby each elastic cord will pass through the lumen of each of the respective segments 21a - c which constitutes one frame member 20 and the elastic property of said respective cords 22 will contribute to keeping the segments 21 of each frame member 20 together in an assembled state. Further, said elastic cord 22 will contribute to facilitating assembly of a frame member 20 as will be described as follows. In one embodiment of the invention the innermost end (i.e. the end positioned closest to the holding device 6) of a first frame segment 21a comprises a socket for the outermost end of an abutting second frame segment 21b. The elasticity of the elastic cord 22 pulls the outermost end of the second segment 21b into the socket of the first segment 21a thereby securely interlocking the two segments 21a, 21b coaxially. In the same way the second 21b and the third 21c segments are interlocked completing the assembly of one frame member 20. It is understood that the respective segments 21a - c of each frame member 20 may be joined to each other in various ways, where sockets and matching end portions is one way. Each segment 21a - c may have an identical outline, as shown in Fig. 5c, or they may have individual outlines as long as they may be joined together.

The reverse operation permits folding of a frame member 20 by an operator, which is accomplished by supplying sufficient longitudinal force to frame segments 21a and 21b to overcome the elasticity of the elastic cord 22 for pulling apart the individual frame segments 21a-c from each other and thereafter folding a first segment 21a over the elastic cord and parallel to the second segment 21b to provide the desired folding characteristics for a frame member 20. In this manner each respective frame segment 21a-c may be folded into a parallel relationship with the next succeeding segment 21a-c meaning that the entire structure of the frame 2 may be folded into a compact bundle. The remaining cloth of fabric may hereafter also be folded together and wrapped around the folded frame 2 into a very compact package with a total length essentially corresponding to the length of one frame segment 21a-c. The folded weather guard package is easily carried, transported and stored, and thanks to the light weight material constituting the weather guard structure 1, transportation is also simplified. As an example of the light weight total structure of the weather guard arrangement 1, a weather guard arrangement including all its components, having the base dimensions 160 × 215 cm will have a weight approximately between 2 - 2.5 kg.

Fig. 5c shows a frame 2 in a disassembled state, where all the frame members 20 have been disconnected from the holding device 6, and the frame segments 21a-c of each frame are separated from each other. As seen herein, the elastic cords 22 which are passing through each frame member 20 are holding the different sub-units of the frame 2 together, even when it is in a disassembled state. This promotes and simplifies a speedy assembly of the weather guard device 1 since assembly merely requires to align the frame segments coaxially with each other whereupon the pulling force from the elastic cords 22 will automatically bring said segments together into an interlocked configuration. From a disassembled state the frame may either be put together to a structure like the one seen in Fig. 5a, or it may be folded together to a compact bundle as previously described.

Fig. 6a - b show a detailed view of the securing device 6, which comprises a number of projecting supporting arms 60 intended to support one joining end of a frame segment 21c. The securing device 6 is preferably made of a resilient material and has an inherent shape which preferably, but not necessarily, is intended to guide the attached frame members 20 to a predetermined direction matching the shape of the main cloth 3 in such a way that the respective outer end supports 23 of an assembled frame 2 will be positioned at the corner portions of the main cloth 3. This means that the securing device may be adapted in shape to any main cloth 3, e.g. having a rectangular, square or triangular base. The securing device is arranged to support a tightening means 7, for instance in the form of a strap member 7 or a tightening band as seen in Fig. 6b. The strap member 7 is used when fastening a weather guard externally of a window opening by tightening the frame 2 towards the window, as will be described in the following.

The assembly and use of a weather guard device 1 according to the present invention is now to be described, referring mainly to Figs. 1 - 5.

A window in the need of shielding may be covered by a weather guard 1 according to the present invention. Assembly of the weather guard 1 is typically commenced by unfolding and spreading out the cloth 3 and unfolding the frame 2. If the frame 2 is originally in a disassembled configuration, the frame members 20 are put together by joining the tubular segments 21a-c end-to-end at their respective joints into a unitary frame member 20, which is facilitated by the pulling action from the elastic cord means 22 extending through the hollow lumen of each of said segments. Each frame member 20 is connected to the respective supporting arm 60 of the securing device 6. Hereby, an assembled frame structure 2 as seen in Fig. 5a is achieved. Next, each outer support 23 of each of the frame members 20 are secured into receiving pockets allocated at the corresponding corner portions 35 of the cloth 3. When having inserted each outer end support 23 into the respective receiving pockets the frame 2 and the cloth 3 will cooperate with each other to form a total weather guard 1 structure assuming a pyramidal shape. This is due to the dimension of the frame 2 and the elastic property of the securing device 6 allowing for the frame members 2 to adapt to the inherent pyramidal shape of the cloth 3 leading to the over all square pyramidal shape as shown e.g. in Figs. 2 -3. However, the securing device 6, being elastic, allows for a user to force the frame members 20 to at least partially collapse, although the elasticity of said securing device 6 will still strive to re-assume the open, spread out structure. To put the weather guard into position covering a window opening, a user will normally bring the weather guard out through the window opening from the inside the building, during which the weather guard at least to some extent must be collapsed in order to fit through the window opening 5. When the weather guard device 1 has been fully brought through the window opening, the user may simply release the frame members 20 whereupon, thanks to the inherent shape of the securing device 6, the frame structure 2 is opened up more or less automatically, with minimal effort from the user. The user next positions the weather guard 1 into a window-covering position and secures it onto the building. To secure the weather guard 1 onto the façade, the strap member 7 which is connected to the securing device 6 is attached to the window centre post (Fig. 1) and tightened which leads to that the securing device 6 is pulled in a direction A against the window opening 5. Hereby, tension forces are transmitted via the projecting frame members 20 to the corner portions 35 of the cloth 3. In case the window opening lacks a centre post any other support structure may equally be used, as understood by the skilled person. The cloth 3 is hereby stretched out and tightly pulled against the façade so that the weather guard 1 is properly and securely abutting with facade surfaces 4 located adjacent the window forming a free space between the window opening 5 and the cloth 3. In this position the force applied onto the securing device 6 by means of tightening the strap 7 is transferred into each of the frame members 2 and further via the outer end supports 23 to the base 30 of the cloth 3 thereby spreading out the base support fabric 30 and also tightly pulling the weather guard device 1 towards the façade. In this position the base support fabric tightly abuts the façade keeping the weather guard device into place.

The elastic securing device 6 having an inherent neutral configuration which strives towards a position where the frame members 2, when attached to the securing device 6, assumes an open position in combination with the lightweight frame design and the lightweight cloth 3 leads to a weather guard which is extremely easy to assemble and put into place. The synergistic effect of an essentially automatic opening of the weather guard is achieved by means of the combination between the securing device 6 and the frame members 2. The securing device 6 will promote spreading of the frame members 2, and the frame members 2 are in their turn easily spread out thanks to their light weight. This is very beneficial during mounting operation since it makes the putting in place procedure both quick and easy.

Also assembly of the weather guard from a completely folded configuration to an assembled one is simplified by means of the frame structure where said elastic cord assists in quick and uncomplicated fitting together of the segments into frame members and onto the securing device.

Thanks to the invention there is achieved a light weight weather guard 1 which is foldable and thereby easy to handle and transport, but yet which can be put together easily and very quickly as well as it can be put into place (covering a window opening) by a single person with minimal effort.

In Figs. 7-8 there is schematically illustrated a weather guard accompaniment in the form of an external protection cover 8 according to one embodiment of the invention: in Fig. 7 the cover 8 is seen from a frontal view and in Fig. 8 there is seen a cross-sectional side view showing a weather guard 1 according to the invention abutting a façade 4, covered by an external protection cover 8 shown in Fig. 7. The protection cover 8 is intended to be mounted on top of a weather guard device 1 and thus form an additional isolating layer, both by means of the actual extra cover material 8 and also by means of an isolating air space 10 created between the exterior side of the weather guard 1 and the inside of the cover 8. Such an extra isolation may be desired during seasons with extreme temperatures (e.g. cold winters or hot summers) where removal of the window glass poses a temperature problem inside the building due to heating/cold escaping through the window opening.

The cover 8 is similar to the weather guard structure 1 in that it comprises a cloth draped over a frame structure, where said frame comprises a number of light weight tubular semi-rigid frame members extending outwardly from a centrally positioned holding device at an apex 82 of the cover structure 8. Preferably the frame members of the cover 8 comprises semi-rigid poles having a limited degree of flexibility which allows them to be at least partially bent when subjected to outward bending forces. Preferably, the frame members of the cover 8 are more flexible compared to the frame members of the weather guard 1, for reasons that will be described hereinafter.

In a preferred embodiment the cover 8 is dimensioned so that it essentially matches the shape and size of the weather guard 1, however in order to provide said isolating air space 10 the cover 8 is provided with longer frame members than the weather guard 1 while having essentially the same dimension of the base. The cover 8 is arranged to be attached to the weather guard 1 via an attachment strap 36 positioned at the apex 32 on the outside of the weather guard 1 (attachment strap 36 is shown e.g. in Fig. 4). In a preferred embodiment the interconnection between the cover 8 and the weather guard 1 at their respective apexes 32, 82 leads to that the apex 82 of the cover 8 is forced to approach the apex 32 of the weather guard 1, which results in an outward bending force being applied onto the flexible frame members of the cover 8 slightly bending each cover frame member into the arch-like configuration schematically illustrated in the cross section of Fig. 8. Thus, an isolating air space 10 between the weather guard 1 and the cover 8 is achieved.

After having positioned the weather guard 1 and the external cover 8 externally over a window opening, the tightening of the strap member 7 will result in the arrangement being pulled towards the window and the weather guard 1 as well as the cover are forced to tightly abut the façade 4 thereby creating a safe and durable seal against weather, outdoor temperatures and wind.

The skilled person realizes that a large variety of modifications may be performed without the use of inventive skill, departing from the description above, e.g. that the interior side of the cloth 3 of the weather guard may be provided with holding sleeves for keeping the frame members 20 of the weather guard 1 into place. Further, the holding device 6 is preferably made of a resilient material, such as rubber, however also other solutions are possible as long as the holding device 6 provides the desired function where said support arms 60 are resiliently bendable.

## Claims

1. A weather guard intended to be fitted externally of a window (5) and comprising a frame (2) and a cloth (3) of fabric which coats said frame (2), said frame being intended to abut with facade surfaces (4) located adjacent the window (5) such as to form a free space between the window frame and the cloth (3), and wherein the frame (2) comprises a number of frame members (20) which extend from a common securing device (6) at an apex (32) of said frame (2), **characterized in that** each frame member (20) comprises at least two tubular segments (21a-c) adapted to be joined end-to-end at a joint into a unitary frame member (20) and an elastic cord means (22) extending through the hollow lumen of each of said segments (21a-c).

2. The weather guard according to claim 1, wherein the elastic cord means (22) of each frame member (20) are arranged to be attached in first one end to said securing device (6) and in one second end to an outer end support (23) of the corresponding frame member (20).

3. The weather guard according to claim 1, comprising four frame members (20) arranged to extend outwardly from said securing device (6) in such a way that the weather guard (1) when in open configuration assumes an overall pyramidal shape.

4. The weather guard according to claim 1, wherein the cloth (3) of fabric comprises a base support (30) arranged to abut the façade surface (4), which base support comprises a number of receiving pockets (35) which equals the number of frame members (20), wherein each pocket (35) is arranged to safely secure the outer end of a frame member (20).

5. The weather guard according to claim 4, wherein the number of frame members is four and said base support (30) is square shaped comprising in each of its corners a receiving pocket (35).

6. The weather guard according to anyone of the previous claims, wherein said common securing device (6) exhibits one protruding guiding member (60) for each frame member (20), each of said guiding members (60) being arranged to be connected to a frame member (20), where said guiding members (60) are resilient.

7. The weather guard according to anyone of the previous claims, wherein said cloth (3) is made of a water impermeable, light weight material, preferably nylon- or polyester-based fabrics.

8. The weather guard according to claim 4, wherein said base support (30) is made of an abrasion resistant, water impermeable material, for example Gore-Tex® material.

## Patentansprüche

1. Wetterschutz zur externen Anbringung an einem Fenster (5) und umfassend einen Rahmen (2) und ein Stofftuch (3), das den Rahmen (2) bedeckt, wobei der Rahmen an Fassadenoberflächen (4) anliegen soll, die sich neben dem Fenster (5) befinden, so dass ein freier Raum zwischen dem Fensterrahmen und dem Tuch (3) gebildet wird, und wobei der Rahmen (2) eine Anzahl von Rahmenelementen (20) umfasst, die sich von einer gemeinsamen Befestigungsvorrichtung (6) an einer Scheitelspitze (32) des Rahmens (2) weg erstrecken,
**dadurch gekennzeichnet, dass** jedes Rahmenelement (20) mindestens zwei rohrförmige Segmente (21a-c) umfasst, die dazu angepasst sind, als Stoßverbindung über ein Verbindungsstück in ein einheitliches Rahmenelement (20) verbunden zu werden, und ein elastisches Seilmittel (22), das sich durch den hohlen Innenraum jedes der Segmente (21a-c) erstreckt.

2. Wetterschutz nach Anspruch 1, wobei das elastische Seilmittel (22) jedes Rahmenelements (20) eingerichtet ist, in einem ersten Ende an der Befestigungsvorrichtung (6) angebracht zu werden und in einem zweiten Ende an einem äußeren Endträger (23) des entsprechenden Rahmenelements (20) angebracht zu werden.

3. Wetterschutz nach Anspruch 1, umfassend vier Rahmenelemente (20), die so angeordnet sind, dass sie sich von der Befestigungsvorrichtung (6) so nach außen erstrecken, dass der Wetterschutz (1) in offener Konfiguration insgesamt eine Pyramidenform annimmt.

4. Wetterschutz nach Anspruch 1, wobei das Stofftuch (3) einen Grundträger (30) umfasst, der dazu eingerichtet ist, an der Fassadenoberfläche (4) anzuliegen, wobei der Grundträger eine Anzahl von Aufnahmetaschen (35) umfasst, die gleich der Anzahl von Rahmenelementen (20) ist, wobei jede Tasche (35) dazu eingerichtet ist, das äußere Ende eines Rahmenelements (20) sicher zu befestigen.

5. Wetterschutz nach Anspruch 4, wobei die Anzahl von Rahmenelementen vier ist und wobei der Grundträger (30) quadratisch ist und in jeder seiner Ecken eine Aufnahmetasche (35) umfasst.

6. Wetterschutz nach einem der vorhergehenden Ansprüche, wobei die gemeinsame Befestigungsvorrichtung (6) ein herausragendes Führungselement (60) für jedes Rahmenelement (20) aufweist, wobei jedes der Führungselemente (60) dazu eingerichtet ist, mit einem Rahmenelement (20) verbunden zu werden, wobei die Führungselemente (60) federnd sind.

7. Wetterschutz nach einem der vorhergehenden Ansprüche, wobei das Tuch (3) aus einem wasserundurchlässigen, leichten Material gefertigt ist, vorzugsweise ein nylon- oder polyesterbasierter Stoff.

8. Wetterschutz nach Anspruch 4, wobei der Grundträger (30) aus einem abriebfesten, wasserundurchlässigen Material gefertigt ist, beispielsweise einem GoreTex®-Material.

## Revendications

1. Une protection contre les intempéries destinée à être montée à l'extérieur d'une fenêtre (5) et comprenant un châssis (2) et une pièce (3) de tissu qui recouvre ledit châssis (2), ledit châssis étant destiné à venir en appui contre des surfaces de façade (4) adjacentes à la fenêtre (5) de manière à former un espace libre entre le cadre de la fenêtre et la pièce (3) de tissu, et dans laquelle le châssis (2) comprend un certain nombre d'éléments de châssis (20) qui s'étendent à partir d'un dispositif de fixation (6) commun au niveau d'un sommet (32) dudit châssis (2), **caractérisée en ce que** chaque élément de châssis (20) comprend au moins deux segments tubulaires (21a-c) conçus pour être assemblés bout à bout au niveau de parties d'assemblage pour former un élément de châssis complet (20), et des moyens formant cordon élastique (22) s'étendant à travers la lumière de chacun desdits segments (21a-c).

2. La protection contre les intempéries selon la revendication 1, dans laquelle les moyens formant cordon élastique (22) de chaque élément de châssis (20) sont agencés pour être fixés, par une première extrémité, audit dispositif de fixation (6) et, par une deuxième extrémité, à un support extérieur (23) de l'élément de châssis (20) correspondant.

3. La protection contre les intempéries selon la revendication 1, comprenant quatre éléments de châssis (20) agencés pour s'étendre vers l'extérieur depuis ledit dispositif de fixation (6) de telle manière que la protection contre les intempéries (1), lorsqu'elle est dans une configuration ouverte, présente une forme généralement pyramidale.

4. La protection contre les intempéries selon la revendication 1, dans laquelle la pièce (3) de tissu comprend un support de base (30) agencé pour venir en appui contre la surface de la façade (4), ce support de base comprenant un certain nombre de poches de réception (35) qui est égal aux nombre d'éléments de châssis (20), chaque poche (35) étant agencée pour fixer de manière sûre l'extrémité extérieure d'un élément de châssis (20).

5. La protection contre les intempéries selon la revendication 4, dans laquelle le nombre d'éléments de châssis est de quatre, et ledit support de base (30) est de forme carrée et comporte à chacun de ses coins une poche de réception (35).

6. La protection contre les intempéries selon l'une quelconque des revendications précédentes, dans laquelle ledit dispositif de fixation commun (6) comprend un élément de guidage (60) en saillie pour chaque élément de châssis (20), chacun desdits éléments de guidage (60) étant agencé pour être relié à un élément de châssis (20), lesdits éléments de guidage (60) étant élastiques.

7. La protection contre les intempéries selon l'une quelconque des revendications précédentes, dans laquelle ladite pièce (3) de tissu est faite en un matériau imperméable, léger, de préférence en des tissus à base de nylon ou de polyester.

8. La protection contre les intempéries selon la revendication 4, dans laquelle ledit support de base (30) est fait en un matériau résistant à l'abrasion et imperméable, par exemple un matériau Gore-Tex®.
